# FASCICULE DE BREVET EUROPEEN

(11) **EP 1 529 473 B1**
(45) Date de publication et mention de la délivrance du brevet: **23.05.2007**
(21) Numéro de dépôt: 04356162.0
(22) Date de dépôt: 08.10.2004
(51) Int. Cl.: A47J 43/08, A47J 43/06

(54) **Boîtier d'appareil électroménager de préparation culinaire prevu pour être tenu à la main selon différentes positions**
In verschiedenen Positionen haltbares Gehäuse für elektrisches Haushaltsgerät zur Nahrungszubereitung
Housing for electrical household cooking appliance designed to be hand-held in different positions

(30) Priorité: 04.11.2003 FR 0312918
(43) Date de publication de la demande: 11.05.2005
(73) Titulaire: SEB S.A., 69130 Ecully (FR)
(72) Inventeur: Lecerf, Joel, 50190 Periers (FR)
(74) Mandataire: Kiehl, Hubert

(56) Documents cités:
- DE-A- 19 635 223
- FR-A- 1 303 638
- US-A- 2 048 455
- US-A- 2 707 623
- US-A- 4 856 718

## Description

La présente invention concerne le domaine technique général des appareils électroménagers de préparation culinaire tenus à la main. La présente invention concerne plus particulièrement les appareils comportant un boîtier dont une extrémité peut être accouplée à différents types d'accessoires, tels qu'un pied de mixage ou un accessoire batteur, et pour lesquels le boîtier peut être tenu verticalement ou horizontalement en fonction de l'accessoire utilisé.

Il est connu, du document FR 1 303 638, un appareil électroménager comportant un boîtier cylindrique allongé intégrant un moteur dont l'arbre de sortie débouche à une extrémité longitudinale du boîtier pouvant indifféremment être accouplée à un pied de mixage ou à un accessoire batteur. Un tel appareil comporte un bouton de commande du moteur qui est disposé à proximité de l'extrémité du boîtier opposée à l'extrémité accouplée à l'accessoire, une telle disposition permettant une manipulation aisée du bouton avec le pouce lorsque le boîtier est utilisé verticalement avec le pied de mixage. Cependant, un tel emplacement du bouton de commande est inadapté à une utilisation horizontale du boîtier avec l'accessoire batteur, le bouton de commande se trouvant alors à l'opposé du pouce de la main tenant l'appareil.

Il est connu, du document US 4 856 718, un appareil électroménager de préparation culinaire comportant un boîtier cylindrique allongé intégrant un moteur et un réducteur dont une extrémité longitudinale peut être accouplée à différents accessoires. Un tel appareil comporte un bouton de commande du moteur placé sur une excroissance du boîtier disposé à hauteur du réducteur, à proximité de l'extrémité du boîtier accouplée à l'accessoire. Un tel emplacement permet une manipulation aisée du bouton de commande avec le pouce lorsque le boîtier est tenu horizontalement mais n'est pas adapté à une utilisation verticale du boîtier. De plus, l'emplacement du bouton de commande sur une excroissance du boîtier entraîne une position du pouce peu confortable favorisant la crispation.

L'invention qui suit vise à pallier ces inconvénients en proposant un boîtier d'appareil électroménager procurant une grande ergonomie d'utilisation, en particulier dans la manipulation du bouton de commande du moteur, que le boîtier soit tenu verticalement ou horizontalement. L'invention vise également à proposer un boîtier d'appareil électroménager procurant un bon équilibre des masses par rapport à la zone de préhension lorsque le boîtier est tenu horizontalement.

Le but de l'invention est atteint par un boîtier d'appareil électroménager de préparation culinaire selon la revendication 1.

Une telle combinaison de caractéristiques permet, en conservant une longueur réduite du boîtier, de ménager longitudinalement une zone de préhension importante de part et d'autre du bouton de commande, facilitant la saisie lors d'une utilisation verticale ou horizontale du boîtier. De plus, une telle caractéristique permet également d'obtenir un bon équilibre des masses par rapport au bouton de commande lorsque le boîtier est utilisé horizontalement.

Selon une autre caractéristique de l'invention, le corps du boîtier présente une section transversale restreinte au niveau de l'emplacement du bouton de commande.

Une telle restriction de section au niveau de l'emplacement du bouton de commande présente l'avantage de procurer une grande ergonomie d'utilisation en permettant une position détendue de la main

Selon une autre caractéristique de l'invention, le moteur et le réducteur sont disposés aux deux extrémités longitudinales opposées du boîtier, le bouton de commande étant placé sensiblement dans la zone centrale du boîtier.

Une telle caractéristique permet d'optimiser l'emplacement des éléments dans le boîtier.

Selon une autre caractéristique de l'invention, le bouton de commande du moteur coopère avec un interrupteur placé entre le moteur et le réducteur.

Une telle caractéristique permet d'avoir un boîtier de diamètre réduit au niveau du bouton de commande tout en utilisant un interrupteur conventionnel.

Selon une autre caractéristique de l'invention, le moteur comporte un arbre de sortie qui est relié à un arbre d'entraînement du réducteur au moyen d'un cardan assurant une liaison souple entre l'arbre de sortie du moteur et l'arbre d'entraînement du réducteur.

Une telle caractéristique permet de s'affranchir de l'obligation d'avoir un parfait alignement entre l'arbre de sortie du moteur et l'arbre d'entraînement du réducteur.

Selon une autre caractéristique de l'invention, les moyens d'accouplement avec l'accessoire comportent des filets quart de tour permettant de visser l'accessoire sur le corps du boîtier suivant quatre positions, décalées l'une de l'autre de 90°, et un système de verrouillage automatique comportant un bouton de déverrouillage pour libérer l'accessoire.

Une telle caractéristique permet de modifier l'orientation du bouton de commande par rapport à l'accessoire et donne ainsi la possibilité à l'utilisateur de choisir la position qui lui convient le mieux.

Selon encore une autre caractéristique de l'invention, le moteur et le réducteur sont refroidis par un ventilateur porté par l'arbre d'entraînement du réducteur et situé entre le réducteur et le bouton de commande, le ventilateur générant un flux d'air dans le corps du boîtier créant une dépression au niveau du bouton de commande.

Une telle caractéristique permet de refroidir le moteur et le réducteur par circulation d'un flux d'air dans le corps du boîtier sans que de l'air chaud, pouvant provoquer des brûlures, ne s'échappe au niveau du bouton de commande.

Selon encore une autre caractéristique de l'invention, le ventilateur est constitué par un disque comportant des pales sur ses deux faces, le boîtier comportant un flasque de guidage du flux d'air à proximité des pales orientées vers le moteur.

Une telle caractéristique permet de contrôler l'orientation du flux d'air émis par le ventilateur de manière à optimiser son efficacité.

Selon une autre caractéristique de l'invention, le bouton de déverrouillage est disposé à proximité de l'extrémité du boîtier munie des moyens d'accouplement avec l'accessoire, le flux d'air engendré par le ventilateur s'échappant au travers d'un jeu prévu entre le bouton de déverrouillage et le corps du boîtier.

Une telle caractéristique présente l'avantage d'assurer simplement, et à moindre coût, l'évacuation du flux d'air chaud sans risque de brûlure de l'utilisateur, le bouton de déverrouillage n'étant manipulé que lorsque l'appareil est arrêté.

Selon encore une autre caractéristique de l'invention, le moteur est alimenté par un cordon d'alimentation passant au travers d'une ouverture ménagée dans l'extrémité longitudinale du boîtier opposée à l'extrémité comportant les moyens d'accouplement avec l'accessoire et il est prévu un jeu à la jonction entre le cordon d'alimentation et le corps du boîtier permettant l'admission d'air dans le corps du boîtier lors du fonctionnement du ventilateur.

Une telle caractéristique présente l'avantage de créer, à moindre coût, une arrivée d'air frais alimentant le flux d'air circulant dans le corps du boîtier.

Selon encore une autre caractéristique de l'invention, un élément amortisseur est interposé entre le moteur et le corps du boîtier, cet élément amortisseur comportant des éléments d'extrémité disposés à chacune des extrémités longitudinales du moteur qui sont reliés entre eux par des bras de liaison élastiques.

Une telle caractéristique permet d'obtenir un élément amortisseur atténuant les vibrations qui reste solidaire du moteur une fois monté sur ce dernier, ce qui présente l'avantage de simplifier l'opération de montage.

L'invention concerne également un appareil électroménager de préparation culinaire comportant un boîtier selon l'invention associé à un accessoire, tel un pied de mixage ou un accessoire batteur.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un boîtier d'appareil électroménager selon un mode particulier de réalisation de l'invention ;
- la figure 2 est une vue en perspective partiellement éclatée du boîtier de la figure 1 ;
- la figure 3 est une autre vue en perspective du boîtier de la figure 1 avec sa coquille supérieure démontée;
- la figure 4 représente une vue en perspective des moteur et réducteur intégrés dans le boîtier de la figure 1 ;
- la figure 5 est une vue de détail, en perspective, du cardan assurant la liaison souple entre l'arbre d'entraînement du réducteur et l'arbre de sortie du moteur.
- la figure 6 est une vue de détail de l'élément amortisseur supportant le moteur ;
- les figures 7 à 9 illustrent des exemples de positions ergonomiques d'utilisation du boîtier de l'appareil en adéquation avec l'accessoire utilisé.

Seuls les éléments nécessaires à la compréhension de l'invention ont été représentés. Pour faciliter la lecture des dessins, les mêmes éléments portent les mêmes références d'une figure à l'autre.

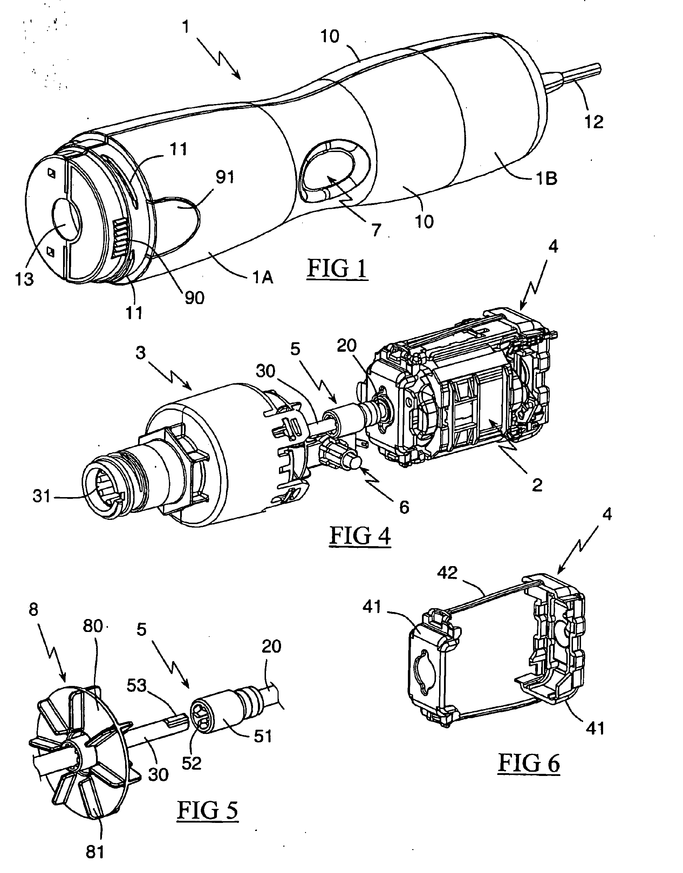

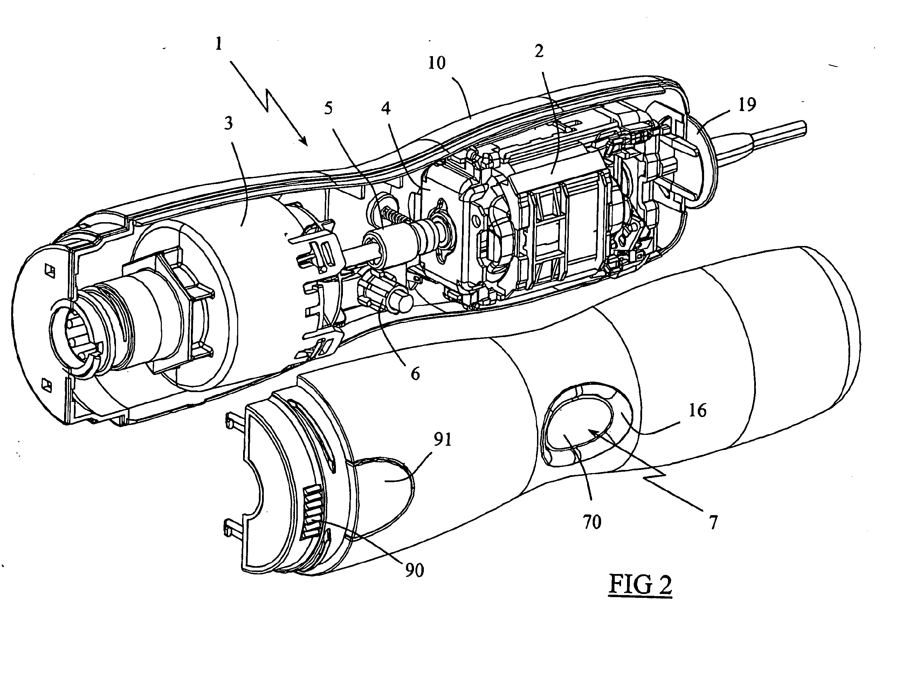

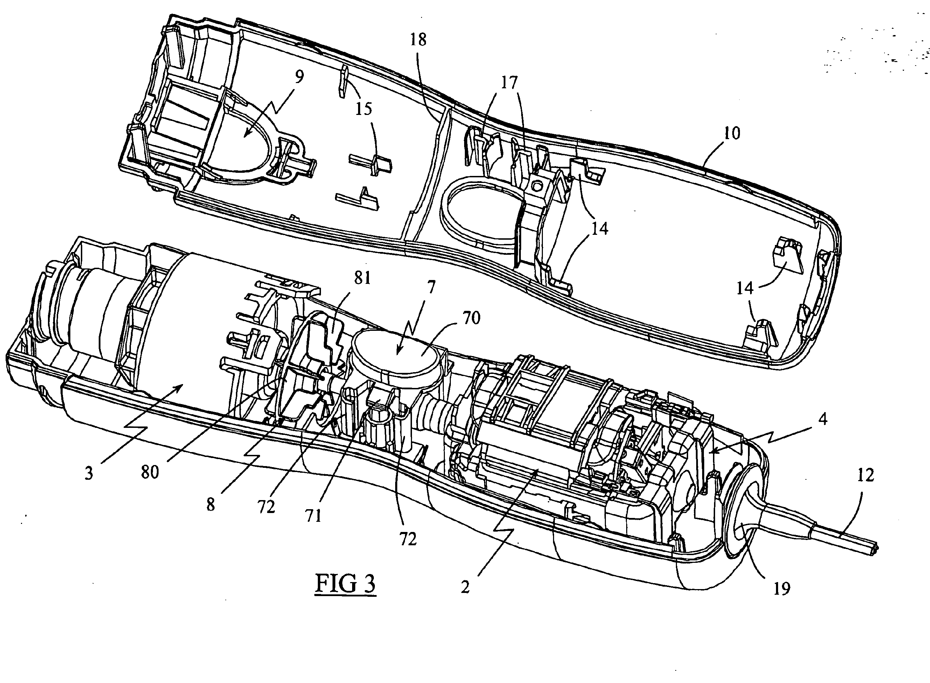

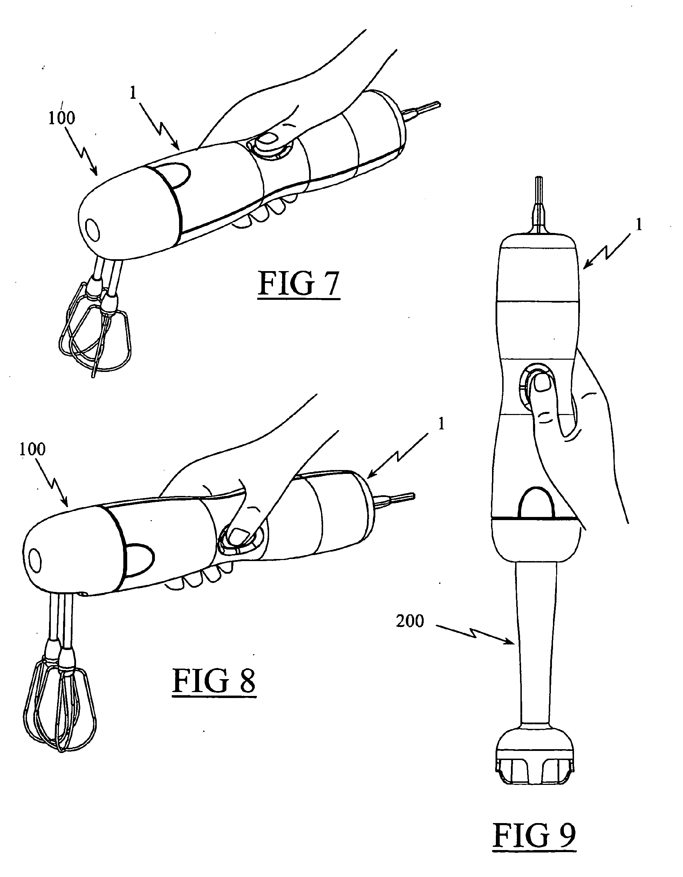

La figure 1 représente un boîtier 1 d'appareil électroménager comportant un corps de forme allongée dont une extrémité longitudinale est destinée à être accouplée à un accessoire, tel un accessoire batteur 100 ou un pied de mixage 200, représentés sur les figures 7 à 9.

Conformément à la figure 1, le boîtier 1 comporte un corps de section circulaire constitué par deux coquilles 10 assemblées l'une sur l'autre et comprend une zone de préhension manuelle comportant une section maximale à proximité des extrémités longitudinales du boîtier 1 et une section restreinte dans la partie centrale du boîtier 1.

L'extrémité du boîtier 1 destinée à être accouplée à l'accessoire, dite extrémité antérieure 1A, possède quatre filets 11 quart de tour régulièrement répartis sur la périphérie des coquilles 10 qui permettent l'accouplement par vissage de l'accessoire suivant quatre orientations décalées de 90°. Le verrouillage en position de l'accessoire sur le boîtier 1 est assuré par un dispositif de verrouillage 9 comportant des dentures 90 faisant élastiquement saillie à l'extérieur du corps du boîtier 1, ces dentures 90 étant destinées à coopérer avec des nervures formées sur l'accessoire. Le dispositif de verrouillage 9 comporte également un bouton de déverrouillage 91 qui, lorsqu'il est enfoncé, permet d'effacer les dentures 90 à l'intérieur du corps du boîtier 1. L'extrémité postérieure 1B du boîtier comporte quant à elle une ouverture pour le passage d'un cordon d'alimentation électrique 12.

Conformément aux figures 2 et 3, le boîtier 1 renferme un moteur 2 dont l'arbre de sortie 20 est relié à l'arbre d'entraînement 30 d'un réducteur 3 comportant en sortie un entraîneur rotatif 31 à deux vitesses agencé en regard d'une ouverture 13 pratiquée dans la cloison fermant l'extrémité antérieur 1A du boîtier.

Le moteur 2 est disposé dans la partie du boîtier 1 proche de l'extrémité postérieure 1B, le boîtier 1 présentant à cet endroit un diamètre légèrement supérieur au diamètre extérieur du moteur 2 de sorte qu'il résulte un léger espace entre le moteur 2 et le corps du boîtier 1 permettant la circulation d'un flux d'air. Le moteur 2 est agencé selon l'axe longitudinal du boîtier 1 et est maintenu par l'intermédiaire d'un élément amortisseur 4 sur des pattes 14 du corps du boîtier 1, le moteur 2 étant préférentiellement espacé du réducteur 3 de plus de 10 mm. L'élément amortisseur 4, représenté seul sur la figure 6, est constitué par deux éléments d'extrémité 41 reliés entre eux par des liaisons élastiques 42, les deux éléments d'extrémité 41 étant placés aux extrémités du moteur 2 et maintenus sur ces dernières par la déformation élastique des liaisons 41.

Le réducteur 3 est disposé dans la partie du boîtier proche de l'extrémité antérieure 1A, le boîtier 1 présentant à cet endroit un diamètre légèrement supérieur au diamètre extérieur du réducteur 3 de sorte qu'il résulte un léger espace entre le réducteur 3 et le corps du boîtier 1 permettant la circulation d'un flux d'air.

L'immobilisation du réducteur 3 est réalisée par des pattes 15 du corps du boîtier 1 et l'arbre d'entraînement 30 du réducteur est préférentiellement relié à l'arbre de sortie 20 du moteur au moyen d'un cardan 5 assurant une liaison souple autorisant un mauvais alignement entre l'arbre d'entraînement 30 du réducteur et l'arbre de sortie 20 du moteur.

Ce cardan 5, représenté démonté sur la figure 5, est par exemple constitué d'une bague 51, solidaire de l'arbre de sortie 20 du moteur, comprenant des rainures 52 dans lesquelles viennent s'engager des méplats 53 portés par l'extrémité de l'arbre d'entraînement 30.

Le fonctionnement du moteur 2 est contrôlé par un interrupteur 6 disposé à côté du cardan 5, dans l'espace libre existant entre le moteur 2 et le réducteur 3. L'interrupteur 6 est actionné par un bouton de commande 7 disposé au niveau de la partie centrale du boîtier 1 présentant une section restreinte, le boîtier 1 comportant à cet endroit une empreinte 16 adaptée à la forme d'un pouce dont le fond est formé par la surface d'actionnement 70 du bouton de commande 7.

Le bouton de commande 7 agit sur l'interrupteur 6 par l'intermédiaire d'un organe d'actionnement 71 s'étendant latéralement au-dessus de l'interrupteur 6 et comporte des glissières 72 coopérant avec des rails de guidage 17 portés par l'une des coquilles 10 du boîtier 1 pour assurer le guidage en translation du bouton de commande 7.

Afin d'éviter l'échauffement excessif du moteur 2 et du réducteur 3 lors du fonctionnement de l'appareil, le boîtier 1 est muni d'un ventilateur 8 solidaire de l'arbre d'entraînement 30 du réducteur 3 et disposé à proximité du réducteur 3, en aval du bouton de commande 7.

Comme on peut le voir plus précisément sur les figures 3 et 5, le ventilateur 8 est constitué d'un disque 80 muni de pales 81 sur ses deux faces, les pales 81 adjacentes au réducteur 3 chassant l'air autour de ce dernier en direction de l'extrémité antérieure 1A du boîtier, des jeux étant prévus au niveau du bouton de déverrouillage 13 pour permettre l'échappement du flux d'air généré par le ventilateur 8.

Les pales 81 orientées vers le moteur 2 sont quant à elles juxtaposées à un flasque 18 porté par les coquilles 10 et coopèrent avec ce flasque 18 pour aspirer l'air se trouvant du côté du moteur 2 au travers d'une ouverture centrale du flasque 18, générant ainsi une dépression dans la partie centrale du corps du boîtier 1 et l'admission d'air frais au travers de jeux prévus à la jonction entre une pièce 19 de surmoulage du cordon 12 et les coquilles 10 du boîtier 1.

Une telle disposition du ventilateur 8 présente l'avantage de générer, à l'intérieur du boîtier 1, un flux d'air circulant de la pièce 19 de surmoulage du cordon 12 vers le bouton de déverrouillage 90 qui assure le refroidissement du moteur 2 et du réducteur 3 sans refoulement d'air chaud au niveau du bouton de commande 7.

Les figures 7 à 9 illustrent les avantages ergonomiques d'utilisation du boîtier selon l'invention en fonction de l'accessoire utilisé. Ainsi, conformément aux figures 7 et 8, le boîtier précédemment décrit pourra être utilisé confortablement dans une position horizontale en étant accouplé à un accessoire batteur 100. En effet, lors d'une telle utilisation l'utilisateur pourra adopter une position ergonomique en appliquant le pouce à hauteur du bouton de commande 7 et en plaçant sa main à cheval sur la zone centrale et la partie postérieure du boîtier 1. Dans cette position, la répartition sensiblement équilibrée des masses autour du bouton de commande 7 obtenue grâce à la répartition du moteur et du réducteur autour du bouton de commande 7 participe au confort d'utilisation.

De plus, l'accessoire batteur 100 peut être vissé sur le boîtier suivant quatre positions différentes, décalées de 90°, ce qui permet à l'utilisateur d'orienter le bouton de commande en fonction de sa convenance. Ainsi, les figures 7 et 8 illustrent respectivement, à titre d'exemples, l'utilisation du boîtier avec le bouton de commande orienté vers le haut et sur le côté. Dans une variante d'utilisation non représentée, le bouton de commande pourra également être orienté vers le bas si l'utilisateur préfère utiliser l'index ou un autre doigt, pour actionner le bouton de commande.

Un tel appareil présente également l'avantage de procurer la même ergonomie d'utilisation pour les droitiers et les gauchers.

Conformément à la figure 9, le boîtier selon l'invention pourra aussi être confortablement utilisé dans une position verticale, en étant par exemple accouplé avec un pied de mixage 200.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, le boîtier selon l'invention pourra être utilisé avec tout type d'accessoire autre que ceux précédemment décrits.

## Revendications

1. Boîtier (1) d'appareil électroménager de préparation culinaire comportant un moteur (2) accouplé à un réducteur (3) muni d'un entraîneur rotatif (31) agencé en regard d'une ouverture (13) pratiquée à une extrémité longitudinale (1A) du boîtier (1), ladite extrémité longitudinale (1A) étant munie de moyens d'accouplement avec un accessoire batteur (100) ou un pied de mixage (200), le boîtier étant prévu pour être tenu horizontalement ou verticalement en fonction de l'accessoire utilisé et comportant un corps comprenant une zone de préhension manuelle de forme allongée, ledit corps renfermant le moteur (2) et le réducteur (3), le fonctionnement du moteur (2) étant commandé par un bouton de commande (7) porté par le boîtier (1), **caractérisé en ce que** le moteur (2) et le réducteur (3) sont espacés l'un de l'autre et **en ce que** le bouton de commande (7) est placé longitudinalement sur la zone du boîtier (1) disposée entre le moteur (2) et le réducteur (3) de manière à ménager longitudinalement, de part et d'autre du bouton de commande (7), une zone de préhension du boîtier (1) sur le corps renfermant le moteur (2) et le réducteur (3).

2. Boîtier d'appareil électroménager selon la revendication 1, **caractérisé en ce** le corps du boîtier (1) présente une section transversale restreinte au niveau de l'emplacement du bouton de commande (7).

3. Boîtier d'appareil électroménager selon l'une quelconque des revendications 1 à 2, **caractérisé en ce que** le moteur (2) et le réducteur (3) sont disposés aux deux extrémités longitudinales (1A, 1B) opposées du boîtier (1), le bouton de commande (7) étant placé sensiblement dans la zone centrale du boîtier (1).

4. Boîtier d'appareil électroménager selon l'une quelconque des revendications 2 à 3, **caractérisé en ce que** le bouton de commande (7) du moteur (2) coopère avec un interrupteur (6) placé entre le moteur (2) et le réducteur (3).

5. Boîtier d'appareil électroménager selon l'une quelconque des revendications 2 à 4, **caractérisé en ce que** le moteur (2) comporte un arbre de sortie (20) qui est relié à un arbre d'entraînement (30) du réducteur (3) au moyen d'un cardan (5) assurant une liaison souple entre l'arbre de sortie (20) et l'arbre d'entraînement (30).

6. Boîtier d'appareil électroménager selon l'une quelconque des revendications 1 à 5, **caractérisé en ce que** les moyens d'accouplement avec l'accessoire (100; 200) comportent des filets quart de tour (11) permettant de visser l'accessoire sur le corps du boîtier (1) suivant quatre positions, décalées l'une de l'autre de 90°, et un système de verrouillage automatique (9) comportant un bouton de déverrouillage (91) pour libérer l'accessoire (100; 200).

7. Boîtier d'appareil électroménager selon l'une quelconque des revendications 2 à 6, **caractérisé en ce que** le moteur (2) et le réducteur (3) sont refroidis par un ventilateur (8) porté par l'arbre d'entraînement (30) du réducteur (3) et situé entre le réducteur (3) et le bouton de commande (7), ledit ventilateur (8) générant un flux d'air dans le corps du boîtier (1) créant une dépression au niveau du bouton de commande (7).

8. Boîtier d'appareil électroménager selon la revendication 7, **caractérisé en ce que** le ventilateur (8) est constitué par un disque (80) comportant des pales (81) sur ses deux faces et **en ce que** le boîtier (1) comporte un flasque (18) de guidage du flux d'air à proximité des pales (81) orientées vers le moteur (2).

9. Boîtier d'appareil électroménager selon les revendications 6 et 8, **caractérisé en ce que** le bouton de déverrouillage (91) est disposé à proximité de l'extrémité (1A) du boîtier munie des moyens d'accouplement, le flux d'air engendré par le ventilateur s'échappant au travers d'un jeu prévu entre le bouton de déverrouillage (91) et le corps du boîtier (1).

10. Boîtier d'appareil électroménager selon l'une quelconque des revendications 7 à 9, **caractérisé en ce que** le moteur (2) est alimenté par un cordon d'alimentation (12) passant au travers d'une ouverture ménagée dans l'extrémité longitudinale (1 B) du boîtier opposée à l'extrémité (1A) comportant les moyens d'accouplement avec l'accessoire et **en ce qu'**il est prévu un jeu à la jonction entre le cordon d'alimentation (12) et le corps du boîtier (1) permettant l'admission d'air dans le corps du boîtier (1) lors du fonctionnement du ventilateur (8).

11. Boîtier d'appareil électroménager selon l'une quelconque des revendications 1 à 10, **caractérisé en ce qu'**un élément amortisseur (4) est interposé entre le moteur (2) et le corps du boîtier (1), ledit élément amortisseur (4) comportant des éléments d'extrémité (41) disposés à chacune des extrémités longitudinales du moteur (2) qui sont reliés entre eux par des bras de liaison élastiques (42).

12. Appareil électroménager de préparation culinaire, comportant un boîtier (1) associé à un accessoire tel un pied de mixage (200) ou un accessoire batteur (100), **caractérisé en ce qu'**il comporte un boîtier (1) selon l'une quelconque des revendications 1 à 11.

## Claims

1. A household electrical appliance housing (1) for a household electrical appliance for preparing food, which housing contains a motor (2) coupled to a gearbox (3) provided with a rotary driver (31) arranged to face an opening (13) provided in a longitudinal end (1A) of the housing (1), said longitudinal end (1A) being provided with coupling means for coupling to a beater accessory (100) or to a blender attachment (200), the housing being designed to be held horizontally or vertically as a function of the accessory being used, and having a body including a graspable zone of elongate shape for being held in the hand, said body enclosing the motor (2) and the gearbox (3), operation of the motor (2) being controlled by a control button (7) carried by the housing (1), said household electrical appliance housing being **characterized in that** the motor (2) and the gearbox (3) are spaced apart from each other, and **in that** the control button (7) is placed longitudinally on that zone of the housing (1) which is disposed between the motor (2) and the gearbox (3) so as to form longitudinally, on either side of the control button (7) a graspable zone via which the housing (1) can be taken hold of on the body enclosing the motor (2) and the gearbox (3).

2. A household electrical appliance housing according to claim 1, **characterized in that** the body of the housing (1) has a cross-section that is smaller at the location of the control button (7).

3. A household electrical appliance housing according to claim 1 or claim 2, **characterized in that** the motor (2) and the gearbox (3) are disposed at opposite longitudinal ends (1A, 1B) of the housing (1), the control button (7) being placed substantially in the central zone of the housing (1).

4. A household electrical appliance housing according to claim 2 or claim 3, **characterized in that** the control button (7) of the motor (2) co-operates with a switch (6) placed between the motor (2) and the gearbox (3).

5. A household electrical appliance housing according to any one of claims 2 to 4, **characterized in that** the motor (2) has an outlet shaft (20) that is connected to a drive shaft (30) of the gearbox (3) by means of a universal joint (5) providing a flexible link between the outlet shaft (20) and the drive shaft (30).

6. A household electrical appliance according to any one of claims 1 to 5, **characterized in that** the means for coupling to the accessory (100; 200) comprise quarter-turn thread starts (11) making it possible to screw the accessory to the body of the housing (1) in respective ones of four positions that are offset from one another by 90°, and an automatic locking system (9) having an unlocking button (91) for releasing the accessory (100; 200).

7. A household electrical appliance housing according to any one of claims 2 to 6, **characterized in that** the motor (2) and the gearbox (3) are cooled by a fan (8) carried by the drive shaft (30) of the gearbox (3) and situated between the gearbox (3) and the control button (7), said fan (8) generating a flow of air through the body of the housing (1), thereby generating suction at the control button (7).

8. A household electrical appliance housing according to claim 7, **characterized in that** the fan (8) is constituted by a disk (80) provided with paddles (81) on both of its faces, and **in that** the housing (1) has a flange (18) for guiding the flow air in the vicinity of those paddles (81) which extend towards the motor (2).

9. A household electrical appliance housing according to claims 6 and 8, **characterized in that** the unlocking button (91) is disposed in the vicinity of the end (1A) of the housing that is provided with the coupling means, the flow of air generated by the fan escaping through clearance provided between the unlocking button (91) and the body of the housing (1).

10. A household electrical appliance housing according to any one of claims 7 to 9, **characterized in that** the motor (2) is powered via a power supply cord (12) passing through an opening (12) provided **in that** longitudinal end (1B) of the housing that is opposite from the end (1A) that is provided with the coupling means for coupling to the accessory and **in that** clearance is provided where the body of the housing (1) meets the power supply cord (12), which clearance enables air to be taken into the body of the housing (1) while the fan (8) is operating.

11. A household electrical appliance housing according to any one of claims 1 to 10, **characterized in that** a vibration damper element (4) is interposed between the motor (2) and the body of the housing (1), said vibration damper element (4) comprises end elements (41) disposed at respective ones of the longitudinal ends of the motor (2) and interconnected by resilient link means (42).

12. A household electrical appliance for preparing food, said appliance including a housing (1) associated with an accessory such as a blender attachment (200) or a beater accessory (100), said household electrical appliance being **characterized in that** it includes a housing (1) according to any one of claims 1 to 11.

## Patentansprüche

1. Gehäuse (1) für ein Elektrohaushaltsgerät zur Nahrungszubereitung, mit einem Motor (2), der mit einem Reduktionsgetriebe (3) angekoppelt ist, das mit einem drehenden Mitnehmer (31) versehen ist, der gegenüber einer an einem Längsende (1A) des Gehäuses (1) vorgesehenen Öffnung (13) angeordnet ist, wobei das Längsende (1A) mit Mitteln zum Ankoppeln an einem Rührzubehör (100) oder Mixstab (200) versehen ist, wobei das Gehäuse dazu vorgesehen ist, je nach verwendetem Zubehör waagerecht oder senkrecht gehalten zu werden, und einen Körper aufweist, der einen langgestreckten Bereich zum Halten mit der Hand umfasst, wobei der Körper den Motor (2) und das Reduktionsgetriebe (3) einschließt, und der Betrieb des Motors (2) über einen vom Gehäuse (1) getragenen Betätigungsknopf (7) gesteuert wird, **dadurch gekennzeichnet, dass** der Motor (2) und das Reduktionsgetriebe (3) voneinander beabstandet sind und dass der Betätigungsknopf (7) längs an dem Bereich des Gehäuses (1) liegt, der zwischen dem Motor (2) und dem Reduktionsgetriebe angeordnet ist, so dass auf der einen und anderen Seite des Betätigungsknopf (7) ein Bereich zum Greifen des Gehäuses (1) an dem den Motor (2) und das Reduktionsgetriebe (3) einschließenden Körper eingebracht ist.

2. Gehäuse für Elektrohaushaltsgerät nach Anspruch 1, **dadurch gekennzeichnet, dass** der Körper des Gehäuses (1) einen verringerten Querschnitt an der Stelle aufweist, an der sich der Betätigungsknopf (7) befindet.

3. Gehäuse für Elektrohaushaltsgerät nach einem der Ansprüche 1 bi 2, **dadurch gekennzeichnet, dass** der Motor (2) und das Reduktionsgetriebe (3) an den beiden entgegengesetzten Längsenden (A1, 1B) des Gehäuses (1) angeordnet sind, wobei der Betätigungsknopf (7) im wesentlichen im mittleren Bereich des Gehäuses (1) angeordnet ist.

4. Gehäuse für Elektrohaushaltsgerät nach einem der Ansprüche 2 bis 3, **dadurch gekennzeichnet, dass** der Betätigungsknopf (7) des Motors (2) mit einem Schalter (6) zusammenwirkt, der zwischen dem Motor (2) und dem Reduktionsgetriebe (3) angeordnet ist.

5. Gehäuse für Elektrohaushaltsgerät nach einem der Ansprüche 2 bis 4, **dadurch gekennzeichnet, dass** der Motor (2) eine Abtriebwelle (20) aufweist, die mit einer Antriebswelle (30) des Reduktionsgetriebes (3) mittels eines Kardangelenks (5) verbunden ist, das eine elastische Verbindung zwischen der Abtriebwelle (20) und der Antriebswelle (30) gewährleistet.

6. Gehäuse für Elektrohaushaltsgerät nach einem der Ansprüche 1 bis 5, **dadurch gekennzeichnet, dass** die Mittel zum Ankoppeln an das Zubehör (100; 200) Vierteldrehungsgewinde (11), die das Einschrauben des Zubehörs auf den Körper des Gehäuses (1) entlang vier Stellungen ermöglichen, welche gegeneinander um 90° versetzt sind, sowie ein automatisches (9) Verriegelungssystem (9) aufweisen, das einen Entriegelungsknopf (91) umfasst, um das Zubehör (100; 200) zu lösen.

7. Gehäuse für Elektrohaushaltsgerät nach einem der Ansprüche 2 bis 6, **dadurch gekennzeichnet, dass** der Motor (2) und das Reduktionsgetriebe (3) über einen Lüfter (8) gekühlt sind, der von der Antriebswelle (30) des Reduktionsgetriebes (3) getragen ist und sich zwischen dem Reduktionsgetriebe (3) und dem Betätigungsknopf (7) befindet, wobei der Lüfter (8) im Körper des Gehäuses (1) eine Luftströmung erzeugt, die am Betätigungsknopf einen Unterdruck bildet.

8. Gehäuse für Elektrohaushaltsgerät nach Anspruch 7, **dadurch gekennzeichnet, dass** der Lüfter (8) aus einer Scheibe (80) besteht, die zwei Flügel (81) an ihren beiden Seiten aufweist, und dass das Gehäuse (1) eine Wange (18) zum Leiten des Luftstroms in die Nähe der zum Motor (2) ausgerichteten Flügel (81) aufweist.

9. Gehäuse für Elektrohaushaltsgerät nach einem der Ansprüche 6 und 8, **dadurch gekennzeichnet, dass** der Entriegelungsknopf (91) in der Nähe desjenigen Endes (1A) des Gehäuses angeordnet ist, das mit den Ankopplungsmitteln versehen ist, wobei der vom Lüfter erzeugte Luftstrom durch ein zwischen dem Entriegelungsknopf (91) und dem Körper des Gehäuses (1) vorgesehenes Spiel hindurch entweicht.

10. Gehäuse für Elektrohaushaltsgerät nach einem der Ansprüche 7 bis 9, **dadurch gekennzeichnet, dass** der Motor (2) über eine Netzschnur (12) versorgt wird, die durch eine Öffnung hindurchgeht, die in dem dem Ende (1A) entgegengesetzten Längsende (1B) des Gehäuses eingebracht ist, das die Mittel zum Ankoppeln an das Zubehör aufweist, und dass an der Verbindung zwischen der Netzschnur (12) und dem Körper des Gehäuses (1) ein Spiel vorgesehen ist, das beim Betrieb des Lüfters das Einströmen von Luft in den Körper des Gehäuses (1) ermöglicht.

11. Gehäuse für Elektrohaushaltsgerät nach einem der Ansprüche 1 bis 10, **dadurch gekennzeichnet, dass** ein Dämpfmittel (4) zwischen dem Motor (2) und dem Körper des Gehäuses (1) eingesetzt ist, wobei das Dämpfmittel (4) endseitige Elemente (41) aufweisen, die an jedem Längsende des Motors (2) angeordnet und über elastische Verbindungsarme (42) miteinander verbunden sind.

12. Elektrohaushaltsgerät zur Nahrungszubereitung mit einem Motor, dem ein Zubehör, wie ein Mixstab (200) oder ein Rührzubehör (100) zugeordnet ist, **dadurch gekennzeichnet, dass** es ein Gehäuse (1) nach einem der Ansprüche 1 bis 11 aufweist.
